# EUROPEAN PATENT APPLICATION

(11) **EP 2 056 531 A1**
(43) Date of publication of application: **06.05.2009**
(21) Application number: 07816297.1
(22) Date of filing: 10.08.2007
(51) Int. Cl.: H04L 12/28, H04L 29/06

(54) **METHOD FOR IMPLEMENTING PNM REDIRECTION TRAFFIC IN CS FIELD AND SYSTEM AND NETWORK UNIT THEREOF**

(30) Priority: 21.08.2006 CN 200610111527
(71) Applicant: Huawei Technologies Co., Ltd., Shenzhen, Guangdong Province 518129 (CN)
(72) Inventor: ZHU, Dongming, Shenzhen Guangdong 518129 (CN); HE, Xiaoyan, Shenzhen Guangdong 518129 (CN)
(74) Representative: Gulde, Klaus W.
(86) International application number: PCT/CN2007/002399
(87) International publication number: WO 2008/025221

(57) **Abstract**

Methods for implementing Personal Network Management PNM redirection service in Circuit Switched (CS) domain and systems and network elements thereof are disclosed to address the problems existing in prior art, such as incorrect accounting and confusion in invoking services. When a CS domain user in a Personal Network is called, a method includes the following steps. A redirection information query network element sends a redirection information query message, according to a received service request, to a PNM server. The redirection information query network element receives the redirection information returned from the PNM server, wherein the redirection information is generated by the PNM server according to user configuration after receiving the redirection information query message. The redirection information query network element performs a routing control according to the redirection information and routes the call to the user equipment that is determined in the redirection information. According to the solutions, the problem that the GMSC may charge the original called users and occupy forwarding times can be avoided. Moreover, the confusion in invoking services can be eliminated.

## Description

### FIELD OF THE INVENTION

The present invention relate to the filed of communication technologies, and in particular to a technology of implementing PNM redirection service in a Circuit Switched domain.

### BACKGROUND

With the development of communication technologies, a core network of a Universal Mobile Telecommunications System (UMTS) is divided into three subsystems: a Circuit Switched (CS) domain, a Packet Switched (PS) domain and an IP Multimedia Subsystem (IMS). The CS domain is used to provide connections of circuit type services to the users. The CS domain includes a Mobile Service Switch Center (MSC, MSC Server/CS-MGW) adapted to achieve switch and signaling control of circuit switched type services; a Gateway Mobile Switching Center (GMSC) adapted to achieve routing addressing for a mobile user in a particular network, the GMSC and the MSC can be integrated or separate. The CS domain further includes an Interworking Function (IWF) which is tightly interconnected with the MSC and is adapted to achieve interconnection (mainly transition of signaling) between a Public Land Mobile Network and an Integrated Services Digital Network, a Public Switch Telephone Network (PSTN), a Packed Data Network (PDN). The concrete function of the IWF is determined according to the types of the services and the networks.

The PS domain is used to provide connections of packet type services to the users.
The PS domain includes a General Packet Radio Service (GPRS) Support Node (GSN), a Serving GPRS Support Node (SGSN), and a Gateway GPRS Support Node (GGSN), adapted to achieve transmission of packets for users of packet type services. The SGSN provides wireless connections between the core network, a Base Station Subsystem (BBS), and a Radio Network subsystem (RNS), and is adapted to achieve mobility management, session management for packet type data services, and to achieve management of movement and communication services for an MS in a mobile network. The GGSN works as an interface between a mobile communication system and other public data networks, the GGSN also has a function for searching location information. Both the SGSN and the GGSN provide accounting information. A Border Gateway (BG) is adapted to achieve interconnection between two GPRS networks, and to ensure security of the network interconnection.

The IMS, which is added by 3GPP in R5 stage, is a subsystem overlapped on an existing PS in a WCDMA network. The IMS utilizes the PS as the bearer channel of its upper control signaling and media transmission, introduces SIP protocol as its service control protocol. The IMS takes the advantage of the SIP protocol: simple, easy to extend and convenient to combine, and provides abundant multimedia services by separating the service control and bearer control. Main function entities within the IMS includes: a Call Session Control Function (CSCF) adapted to control user registration and to control sessions, an Application Server (AS) adapted to provide service logic control functions, a Home Subscriber Server (HSS) adapted to achieve centralized management of user subscription data, and an MGCF/IM-MGW adapted to achieve interconnection between circuit switched networks. A user accesses the IMS through Proxy-CSCF (P-CSCF), which is a proxy node at a location where the user currently locates. The trigger control of the sessions and services and the service interaction with the AS are achieved by Serving -CECS (S-CSCF), which is a serving node at a home domain where the user registers.

The HSS is the most important database in the IMS subsystem for each user, and stores information about users, which is used to support processes of calls and sessions by the network entities. Such information includes a user identifier, number and addressing information, user security information, user location information and user profile information. One home network can have one ore more HSSes, according to the number of the users, capacity of the network devices, and actual conditions of networking. The HSS provides a business interface externally, for a user to maintain data (such as adding, modifying, deleting user subscription data). The HSS also supports user date download through a Cx interface (the interface between the HSS and an Interrogating-CSCF (I-CSCF)/S-CSCF) or an Sh interface (the interface between the HSS and the AS).

Before the emergence of IMS, the HSS/HLR (Home Location Register) is the entity for storing user CS domain data and user PS domain data, and the HLR supports C interface (the interface between the HLR and the GMCS/MSC), D interface (the interface between the HLR and a VLR (Visitor Location Register)), Gr interface (the interface between the HLR and the SGSN), Gc interface (the interface between the HLR and the GGSN). Generally, the HSS is regarded as a superset of the HLR, and the HSS and HLR are generally set integrated and the HSS is embodied with the functions of the HLR. When a user registers in the network, registration information is transferred to the HLR/HSS, and user subscription information is downloaded from the registration information for subsequent service operations. The AS can obtain and subscribe to IMS domain data and a part of CS, PS domain data through the Sh interface. However, in actual networking, the HLR and HSS may be set separately.

Generally, a user may concurrently have several equipments for operating mobile communication service, such equipments may be a CS domain equipment, an IMS domain equipment, a PSTN terminal, they may belong to different operators, and their telecommunication services may be served by different operators. Such equipments may have different abilities, the difference on ability limits the support of some applications or some particular media types (such as video, image) on some equipments. 3GPP has introduced a new service, which is named Personal Network Management (PNM) in R7 stage, this new service focuses on the user, achieves centralized management for all of the equipments of the user or can be utilized by the user, so as to provide better service experience for the user by sufficiently using the different abilities of the different equipments and the external devices of the equipments.

In a first stage of PNM, it is mainly focused on management of UEs within a PN. Two types of services, redirection service and private network service between UEs are provided. The redirection service refers to the following service: a user activates a UE within a Personal Network (PN) in advance; all of the subsequent sessions and services requests that are transmitted to any UE within the PN are redirected and terminated at the activated UE. For example, all of the video telephone requests that are transmitted to any UE within the PN are redirected and terminated at the UE with the largest screen in the PN.

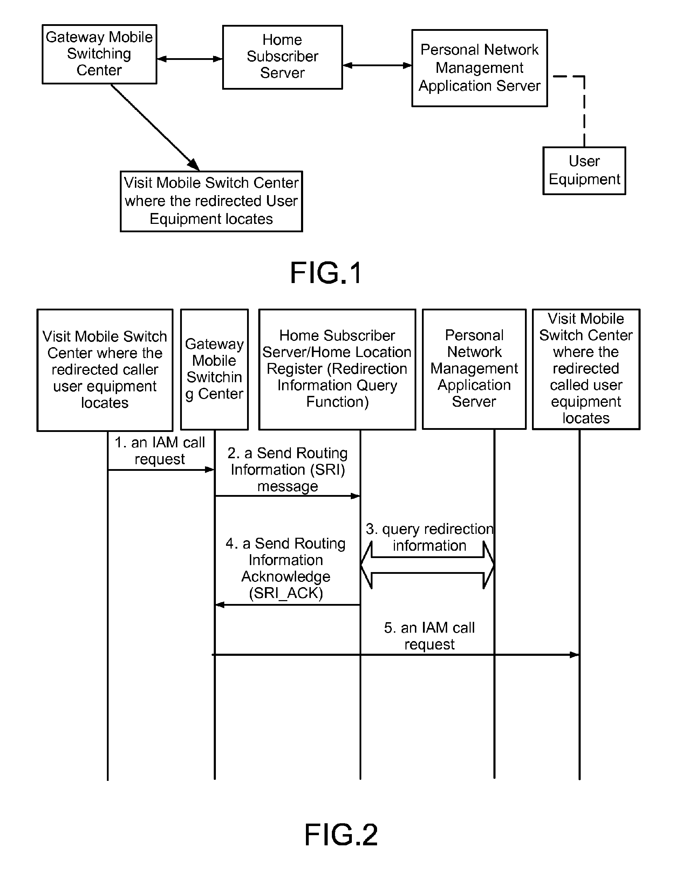

Implementation of PNM service that is currently proposed by 3GPP is shown in Fig 1 and Fig 2. A CS domain user equipment of a user that subscribes to PNM service uses Unstructured Supplementary Service Data (USSD) to establish connection with a PNM AS that provides the PNM service, so that a UE is added into a PN or a UE within the PN is activated. The CS domain equipment of the user that subscribes to the PNM service receives a call request. When the GMSC requests routing information from the HSS, the HSS determines and detects that the user subscribes to the PNM service, then the HSS sends a command request to the PNM AS through the Sh interface. The PNM AS returns the number of the UE which is currently activated, according to the activated user configuration, to the HSS, as a redirection number. The HSS returns the redirection number to the GMSC, the GMSC performs number analysis and initiates a call request to the Visit Mobile Switch Center (VMSC) in which the redirected UE locates. From a perspective of the GMSC, the implementation of the service redirection is the same as the implementation of a forwarding service, and the GMSC is not aware of that the redirection of the call is due to the subscription of the PNM service by the user and is triggered by a corresponding redirection service.

The inventor found during invention process that it is explicitly proposed in the PNM service that in a PNM redirection service, the original called user shall not be charged, and the fee incurred due to the current session shall be accounted to the UE that finally terminates the session (the redirected UE). However, under the current infrastructure, the redirection service is the same as the forwarding service from the perspective of the GMSC, and the GMSC of the original called user has charged fee to the original called user in the forwarding service, so that the above requirements, the original called user shall not be charged in redirection service cannot be satisfied.

Similarly, in the forwarding service, the GMSC will perform a "plus 1" operation on a forwarding times counter before initiating a new call request. When a network limits the largest number of times for call forwarding service, the PNM redirection service in this infrastructure will occupy one time of forwarding service, and may result failure of invoking the forwarding service when an actual forwarding service of a UE that terminates the call occurs due to the number limitation of the call forwarding service.

Furthermore, in prior art, the invoking priority among the PNM redirection service, a CS domain supplementary service and an intelligent service of the called user is not explicitly defined. If the original called user subscribes to these services simultaneously, it is not certain whether the CB, ODB services shall affect the PNM redirection service, and whether the HSS shall choose the CFU forwarding number or the number determined by the PNM redirection service as the forwarding number to be returned. Such problems cannot be solved effectively and may cause confusion when invoking services.

### SUMMARY

Embodiments of the present invention provide method for implementing PNM redirection service in CS domain, and system and network element thereof. The problems existing in prior art, such as incorrect accounting and confusion when invoking services, can be solved by embodiments of the present invention.

A method according to an embodiment of the present invention, when a CS domain user in a PN is called, includes:
sending, by a redirection information query network element, a redirection information query message to a Personal Network Management (PNM) server according to a received service request;
receiving, by the redirection information query network element, redirection information returned from the PNM server, wherein the redirection information is generated by the PNM server according to user configuration after receiving the redirection information query message; and
performing, by the redirection information query network element, a routing control according to the redirection information, and routing the call to a user equipment (UE) that is determined in the redirection information.

A system for implementing PNM service in CS domain according to an embodiment of the present invention includes:
a redirection information query network element, adapted to generate a redirection information query message according to a service request generated by a user when the user is called and send the redirection information query message, receive a redirection information message and routes the call to a user equipment that is determined in the redirection information; and
a PNM server, adapted to receive the redirection information query message, perform redirection logic, determine whether or not to perform redirection according to user configuration, generate the redirection information message and return the redirection information message to the redirection information query network element.

A redirection information query network element according to an embodiment of the present invention is used in a PN network, and includes:
a service request receiving unit, adapted to receive a service request generated by a CS domain user when the user is called;
a redirection query unit, adapted to interact with the PNM server to obtain the redirection information according to the service request received by the service request receiving unit; and
a redirection information sending unit, adapted to send out the redirection information obtained by the redirection query unit.

Embodiments of the present invention provide a redirection query module in a PNM service system, and the module is provided at an underlying Signaling Transfer Point (STP) of the HSS, GMSC or PNM server, or is connected with the above networks respectively. Inquisition of redirection information is performed by the bottom STP of the HSS, GMSC or the PNM server, the solutions of embodiments of the present invention avoid the problem that the GMSC charges the original called user and the redirection service occupies the forwarding service numbers. Furthermore, the redirection service is triggered as Customized Application for Mobile network Enhanced Logic (CAMEL) service and confusion in invoking services is also avoided.

### BRIEF DESCRIPTION OF THE DRAWINGS

Fig 1 is a block diagram of a system that implements PNM service in CS domain according to the prior art;

Fig 2 is a flowchart of implementing of PNM service in CS domain according to the prior art;

Fig 3 is a flowchart of a method according to an embodiment of the present invention;

Fig 4 is a flowchart of a first embodiment of the present invention;

Fig 5 is a flowchart of a second embodiment of the present invention;

Fig 6 is a flowchart of invoking a redirection service and invoking a forwarding service according to the second embodiment of the present invention;

Fig 7 is a flowchart of invoking a redirection service and invoking a CB service according to the second embodiment of the present invention;

Fig 8 is a flowchart of a third embodiment of the present invention;

Fig 9 is a flowchart of making a determination by a PNM server after receiving a redirection information query message in the first, second and third embodiments;

Fig 10 is a block diagram of a system according to an embodiment of the present invention;

Fig 11A and Fig 11B is block diagram of a system according to a fourth embodiment of the present invention;

Fig 12A and Fig 12B is block diagram of a system according to a fifth embodiment of the present invention;

Fig 13A and Fig 13B is block diagram of a system according to a sixth embodiment of the present invention; and

Fig 14 is a block diagram of a redirection query network element according to a seventh embodiment of the present invention.

### DETAILED DESCRIPTION

Embodiments of the present invention provide a method for implementing PNM redirection service in CS domain and the system and network element thereof. According to embodiments of the present invention, a Redirection Information Query Function (RIQF) is provided in a system for implementing the PNM redirection service, and the RIQF is provided in the HSS, GMSC, or is implemented by STP. When the RIQF is provided in the GMSC, a redirection information query is triggered as a CAMEL service of the called user. When the RIQF is provided in the HSS, it is accomplished by obtaining a forwarding number of a forwarding service. When the RIQF is configured in the STP, it is implemented by intercepting a routing query request message that is sent from the GMSC to the HSS on the STP and sending a redirection information query to a PNM server. The above solutions solve the existing problems in the prior art, such as incorrect charging and confusion in invoking services.

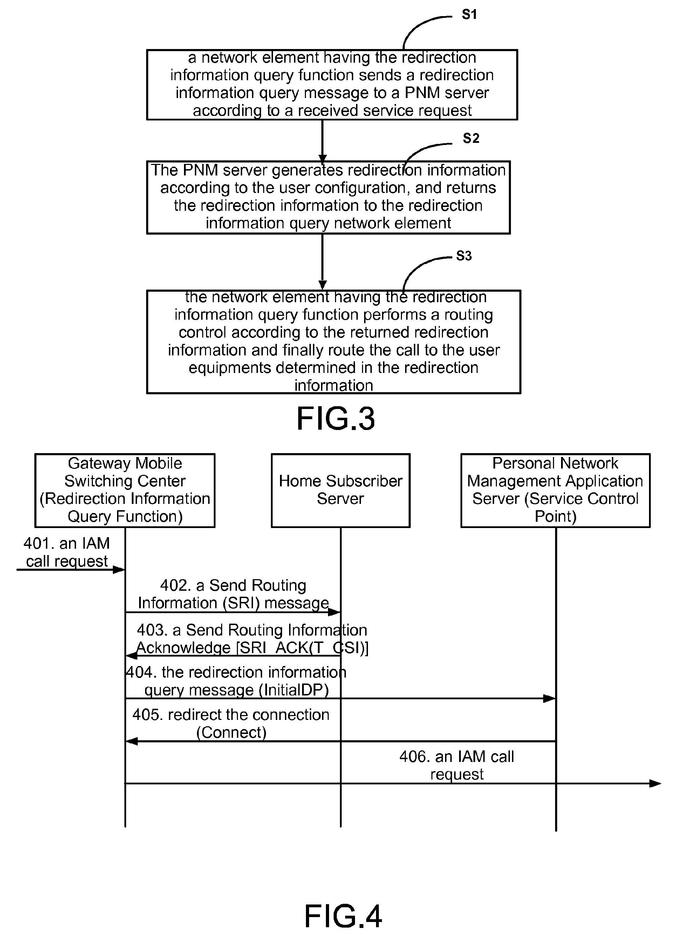

Embodiments of the present invention provide a method for implementing PNM service in CS domain. As shown in Fig 3, when a user in CS domain is called, the method includes the following steps.

Step S1: A redirection information query network element (that is, a network element having the ability of querying redirection information) sends a redirection information query message to a PNM server according to a received service request.

Step S2: The PNM server receives the redirection information query message, generates redirection information and returns the redirection information to the redirection information query network element.

Step S3: The redirection information query network element performs a routing control according to the returned redirection information and finally routes the call to the user equipments determined in the redirection information.

According to embodiments of the present invention, the redirection information query function is provided in the GMSC, HSS, or implemented by STP. The following embodiments further describe the present invention.

Embodiment 1

The redirection information query network element is a GMSC. As shown in Fig 4, the method includes the following steps.

Step 401: The user equipment of a user in CS domain is called, and the GMSC of the called user receives an IAM request carrying a number of the called user.

Step 402: According to the IAM request, the GMSC of the called user sends a Send Routing Information (SRI) message to the HSS of the called user.

Step 403: It is optional that before a Send Routing Information Acknowledge (SRI_ACK) is returned, the HSS may need to determine, according to the user identifier and priorities set for the services, whether the called user has subscribed to other supplementary services that have a higher priority than the PNM service, such as Call Barring, Operator Determining Call Barring. If the priorities of other supplementary services are lower than the PNM service or the other supplementary services having higher priorities than the PNM service are not activated, the HSS returns CAMEL subscription information of the called user [SRI_ACK(T_CSI)] to the GMSC. The information contains Terminated-CAMEL Subscription Information (T_CSI) that is associated with redirection service. If other supplementary services having higher priorities than the PNM service, such as the CB service, and these supplementary services are activated, the HSS will call the services with higher priority first, and determines contents of routing query acknowledge message (SRI_ACK) to be returned according to the result of executing such services. For example, if the service is CB service, the HSS directly returns a response to the GMSC, indicating that the call is barred. When the priority of the PNM service is higher than the CB service and the called user has activated the CB service, the HSS determines, after receiving a routing query request, the called user is a subscriber that subscribes to PNM service according to user data, and the HSS returns CAMEL subscription information of the called user rather than performing the call CB service logic. Alternatively, when the priority of the PNM service is higher than the CB service, and the called user does not subscribe to the PNM service or does not activate the CB service, the HSS directly returns the CAMEL subscription information of the called user.

404: The GMSC triggers the redirection information query service according to the returned CAMEL subscription information of the called user, and sends redirection information query message (InitialDP), according to an address of a GSM service control point (SCP) contained in the T_CSI information to the PNM server through an existing CAP signaling interface.

Step 405: The PNM server executes a predetermined redirection service logic and returns Connect or Continue message to the GMSC through the existing CAP signaling interface, that is, to choose an activated UE in a PN that is different from the UE currently called, or to determine that the current call is not redirected and shall be connected to the original called UE (The present embodiment takes Connect message as an example).

According to the present embodiment, the PNM server is an SCP in CS domain. After the PNM server receives the redirection information query message, the PNM server checks and determines the subscription status of other CAMEL services of the called user, and controls the order of invoking PNM redirection service and other CAMEL services via an internal logic. When the PNM server determines that the called user is an online accounting user, and when the PNM redirection service determines to redirect a call, the PNM server does not charge the original called user. If the PNM redirection service determines not to redirect the call, the PNM server charges the original called user.

Step 406: The GMSC determines the redirection number according to the redirection information message returned by the PNM server and initiates an IAM request to the switch center where the called user locates, initiates a call request to the new called user equipment or continues to route the call to the original called user equipments when a Continue message is received (it is determined that the call does not need to be redirected according to the redirection information message returned by the PNM server).

Step 405 further includes that the PNM server determines whether the called user has also subscribed to other CAMEL services, if the called user also subscribes to other CAMEL services, the PNM server controls the invoking relationship between each CAMEL service via an internal logic. When the PNM server determines, according to the configuration of the called user, that the current call does not need to be redirected, and the called user is an online accounting user, the PNM server charges the user. If the call needs to be redirected, and the called user is an online accounting user, the PNM server does not charge the user.

Embodiment 2

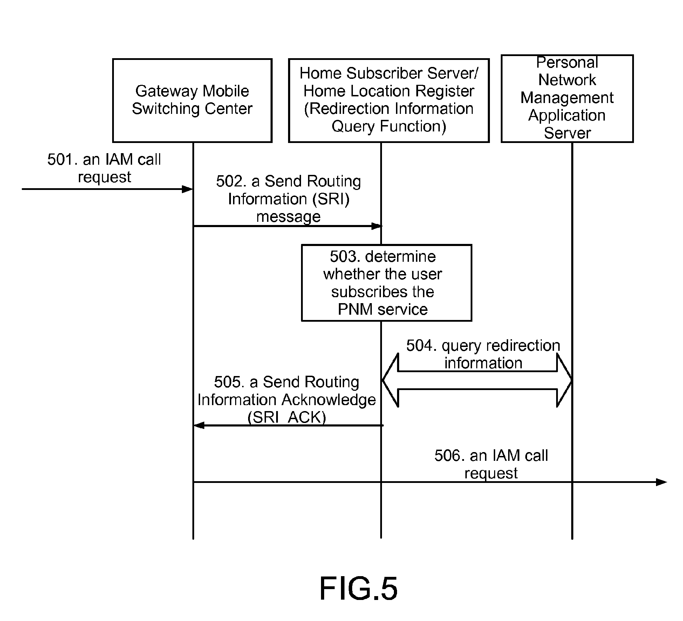

When the redirection information query network element is HSS, the method includes the following steps as shown in Fig 5.

Step 501: A user that subscribes to the PNM service is called. The GMSC of the user receives an IAM request carrying number information of the user.

Step 502: The GMSC sends Send Routing Information (SRI) to the HSS.

Step 503: The HSS determines whether the user has subscribed to the PNM service. If the user has subscribed to the PNM service, step 504 is performed.

It is optional in step 503 that the HSS determines if the called user has subscribed to any other services that have a higher priority than the PNM service. For example, suppose the called user has subscribed to the PNM service, if the called user subscribes to other services having lower priority than the PNM service, or the called user does not subscribe to other services, or the user subscribes to other services having higher priority than the PNM service and the PNM service is not activated, step 504 is performed. If the HSS determines that the user has subscribed to the PNM service, and the user also has subscribed to and activates other services having higher priority that the priority of the PNM service, the HSS will invoke the services with higher priority first, and determines the subsequent operations according to the result of executing such services. For example, if the service is Call Barring service, the HSS directly returns a response to the GMSC indicating that the call is barred, and the GMSC sends a call failure response message to the calling party.

Step 504: The HSS sends a redirection information query message to the PNM server through a Sh interface, that is, to query information about the UE that is determined after call redirection, the PNM server returns the redirection information to the HSS according to configuration of the called user.

Step 505: The HSS generates a Send Routing Information Acknowledge (SRI_ACK) message according to the received redirection information and sends the message to the GMSC. If the HSS determines that the current call needs to be redirected according to the redirection information and the redirection is caused by the PNM redirection service, the HSS may carry a special indicator in the routing query acknowledge message (SRI_ACK) returned to the GMSC, wherein the special indicator is used to indicate that the call redirection is a result of the PNM redirection service.

Step 506: The GMSC makes a determination on the routing query acknowledge message (SRI_ACK) returned by the HSS and initiates an IAM request to the new called user equipment that is determined after redirection.

According to the present embodiment, after the HSS receives the redirection information returned by the PNM server, it is optional that the HSS determines the routing query acknowledge message (SRI_ACK) to be returned to the GMSC according to user attributes of the analysis of the redirection information returned from the PNM server. Analyzing the redirection information may include determining whether the redirection number determined by the PNM server redirection service is the same as the forwarding number in the routing query message (SRI) message; and/or whether the called user subscribes to the PNM service and other forwarding services simultaneously; and/or whether the called user subscribes to the PNM service and the CAMEL service of the called user simultaneously.

The determination process of the redirection information used by the HSS is as follows. The PNM server redirection service determines that the redirection number is different from the currently called number in the routing query message (SRI). And, the HSS finds out that the called user subscribes to the PNM service and other forwarding services simultaneously. The HSS considers the priority of the PNM redirection service to be higher than the priority of the forwarding service. Then, the forwarding number contained in the routing query acknowledge message (SRI_ACK) being returned to the GMSC is the redirection number determined by the redirection service, and forwarding service data is not returned to the GMSC.

If the HSS finds out that the redirection number determined by the PNM server redirection service is the same as the currently called number in the routing query message (SRI), the HSS continues to call other services according to an existing procedure, or obtains a roaming number from the called center and returns the routing query acknowledge message (SRI_ACK) to the GMSC.

Further, if the redirection number determined by the PNM server redirection service is different from the currently called number in the routing query message (SRI), the HSS returns the special indicator in the routing query acknowledge message (SRI_ACK) to the GMSC, which can be implemented by adding a new forwarding reason value through an extended MAP Protocol, wherein the new forwarding reason value is used to indicate the call redirection caused by the PNM redirection service.

The HSS finds out that the redirection number determined by the PNM server redirection service is different from the currently called number in the routing query message (SRI), and the HSS further determines whether the called user subscribes to the PNM service and the CAMEL service of the called user simultaneously. If the HSS finds out that the called user subscribes to the PNM service and the CAMEL service of the called user simultaneously, when the priority of the PNM service is higher than the priority of the CAMEL service of the called user, the HSS may no longer carry the subscription information of the CAMEL service of the called user in the routing query acknowledge message (SRI_ACK) being returned to the GMSC. When the priority of the PNM service is lower than the priority of the CAMEL service of the called user, the routing query acknowledge message (SRI_ACK) being returned to the GMSC shall contain both subscription information of the CAMEL service of the called user, routing information determined by the PNM redirection service and call redirection instruction.

In step 506, the determination process, performed by the GMSC, according to the routing query acknowledge message (SRI_ACK) returned by the HSS includes the followings.

If the GMSC determines, according to the routing query acknowledge message (SRI_ACK) returned by the HSS, that the current call is redirected and the redirection is caused by the PNM redirection service, then the accounting information to be generated carries a special indicator, so that an accounting center can perform a special process according to the special indicator and does not charge the original called user.

If the priority of the CAMEL service of the called user is higher than the PNM redirection service, the GMSC determines, according to the routing query acknowledge message (SRI_ACK) returned by the HSS, that the current call is redirected and the redirection is caused by the PNM redirection service, when the original called user is an online accounting user, the Initial DP message will carry a special indicator so that the SCP can perform special process according to the special indicator and does not charge the original called user.

The GMSC determines, according to the routing query acknowledge message (SRI_ACK) returned by the HSS, that the current call is redirected and the redirection is caused by the PNM redirection service, then the accounting information to be generated carries a special indicator, so that no augment operation will be performed on the forwarding times and the call redirection caused by PNM redirection will not occupy the forwarding times.

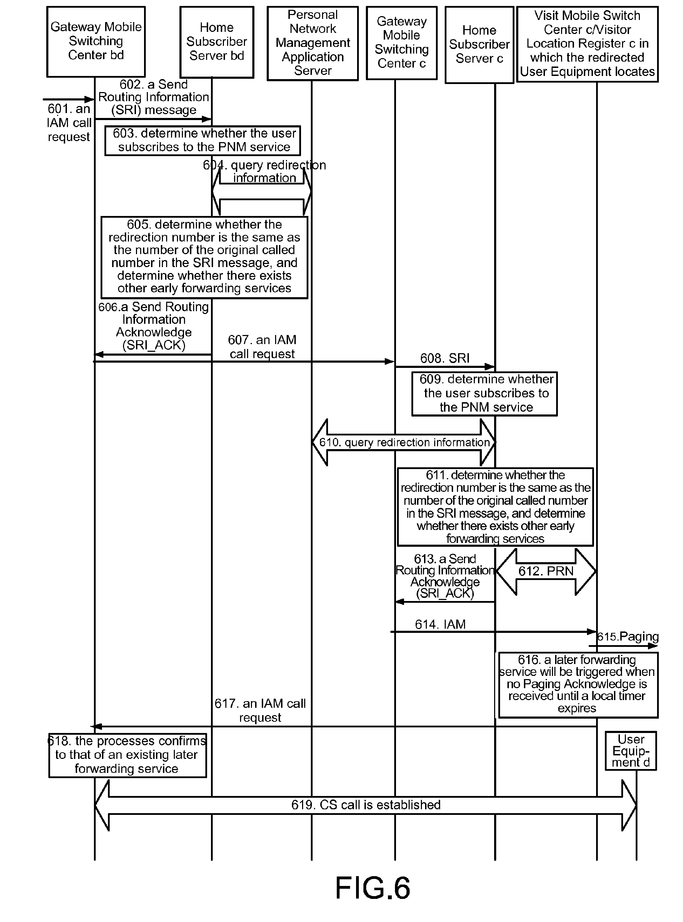

According to this embodiment, the call relationship of the services in CS domain is illustrated by an example in which a CS domain user subscribes to the PNM redirection service and the forwarding service while the Call Barring service is not activated. As shown in Fig 6, the method includes the following steps.

Step 601: A user b that subscribes to the PNM service is called, and a GMSC b of the user b receives an IAM call request.

Step 602: The GMSC b sends routing query message (SRI) to an HSS b.

Step 603: If the priority of the Call Barring service is higher than the priority of the PNM redirection service, and the user equipment b does not activate this service (such as the CB service), the HSS determines whether the user subscribes to the PNM service. If the PNM service is subscribed, step 604 is performed. If the PNM service is not subscribed, the HSS continues to call other services that have lower priority or requests a roaming number from a VMSC b of the called user.

If the priority of the Call Barring service is lower that the PNM redirection service, step 604 is performed directly.

Step 604: The HSS b sends a redirection information query message to a PNM AS. The PNM AS returns redirection information to the HSS b after executing redirection logic.

Step 605: The HSS b determines whether a number in the redirection information returned by the PNM AS is the same as the number of the currently called number. If the numbers are the same, the HSS b continues to determine whether the user subscribes to and activates other forwarding services. If the numbers are different, step 606 is performed.

Step 606: The HSS b returns a routing query acknowledge message (SRI_ACK) that carries redirection information, to the GMSC b.

In step 606, the redirection information may further contain a special indicator, such as a new forwarding reason value of an extended MAP Protocol. If the priority of the CAMEL service of the called user is higher than the priority of the PNM service, CAMEL subscription information is also returned. If the priority of the CAMEL service of the called user is not higher than the priority of the PNM service, CAMEL subscription information is not returned.

Step 607: After GMSC b receives the routing query acknowledge message (SRI_ACK), it finds out that the call is redirected and the routing query acknowledge message (SRI_ACK) further contains an extended special indicator indicating the call is redirected, then the GMSC b does not count this call redirection into the forwarding times, and the accounting information to be generated may carry a special indicator, so that an accounting center can perform a special process according to the special indicator. After that, the GMSC b initiates an IAM call request to a GMSC c in which the new called UE c locates, wherein the new called UE c is determined by the PNM server redirection service.

Step 608: The GMSC c initiates a routing query message (SRI) to the HSS c.

Step 609: If the priority of the Call Barring service is higher than the priority of the PNM redirection service, and the user equipment c does not activate this service (such as the CB service), the HSS determines whether the user subscribes to the PNM service. If the PNM service is subscribed, step 610 is performed. If the PNM service is not subscribed, the HSS continues to invoke other services that have lower priority or requests a roaming number from a VMSC b of the called user.

If the priority of the Call Barring service is lower that the PNM redirection service, step 610 is performed directly.

Step 610: The HSS c sends a redirection information query message to a PNM AS. The PNM AS returns redirection information to the HSS c after executing redirection logic.

In this step, because the user equipment b and user equipment c belong to the same user, the PNM AS triggered is the same PNM.

Step 611: The HSS c determines whether the redirection number returned by the PNM AS is the same as the number of the currently called number. If the numbers are the same, the HSS b continues to determine whether the user has other forwarding data and step 612 is performed. If the numbers are different, step 613 is performed.

Step 612: The redirection number c returned by the PNM AS is the same as the number of the currently called UE c, and UE c does not subscribe other early forwarding services, then the HSS queries the center where UE c currently locates and obtains the actual roaming number, the HSS returns routing query acknowledge message (SRI_ACK) to the GMSC c according to the obtained roaming number, the routing query acknowledge message (SRI_ACK) does not contain information that indicates the call is redirected.

Step 613: The HSS c returns routing query acknowledge message (SRI_ACK) to the GMSC c, the routing query acknowledge message (SRI_ACK) may further contain a new forwarding reason value of an extended MAP Protocol.

Step 614: The GMSC c initiates a RAM accessing request to a VMSC c where the number of UE c locates.

Step 615: The VMSC c initiates a Paging request to the user equipment c.

Step 616: If a Paging Acknowledge of the user equipment c is not received until a local timer of the VMSC c expires, the VMSC c determines that the number of the UE c subscribes to a later forwarding service and the forwarding party is user equipment d.

Step 617: The VMSC c initiates an IAM request to a GMSC d of user equipment d.

Step 618: Because user equipment d does not belong to the user that subscribes to PNM service, subsequent call control processes confirms to an existing later forwarding service logic.

Step 619: CS call is successfully established.

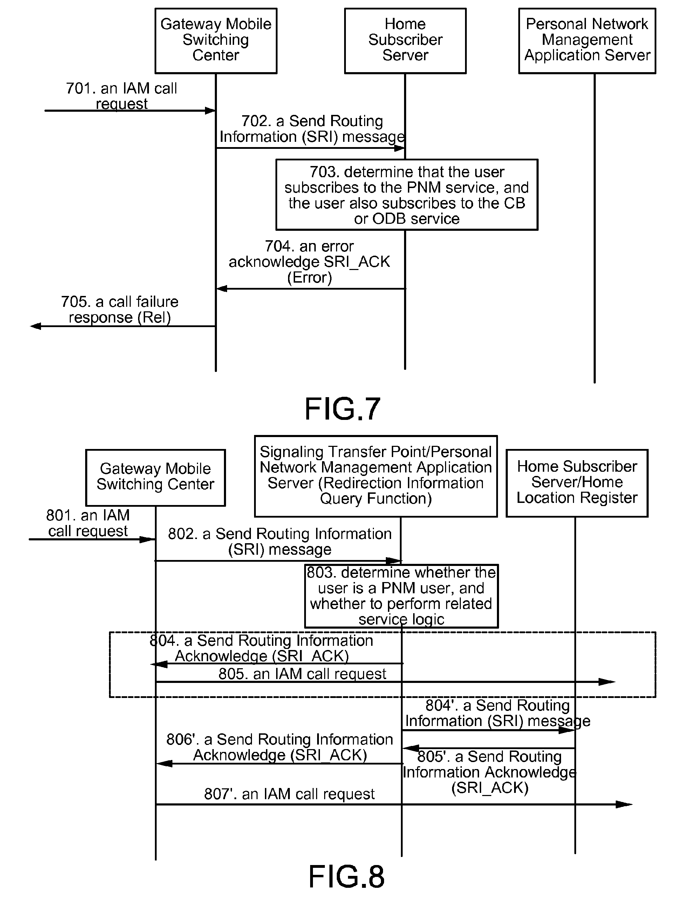

Referring to Fig 7, in this embodiment, the invoking of PNM redirection service and CB service in CS domain is further described.

Step 701: A CS domain user that subscribes to the PNM service is called. The GMSC of the user receives an IAM call request carrying number information of the called user.

Step 702: The GMSC of the called user sends routing query message (SRI) to an HSS.

Step 703: The HSS determines that the user subscribes to the PNM service. In the case where the priority of CB service is higher than the priority of the PNM service and the user also subscribes to and activates the CB service, the PNM AS is not longer requested for the redirection information.

Step 704: The HSS returns an error acknowledge SRI_ACK (Error) that bars the operation of the service to the GMSC.

Step 705: The GMSC returns a call failure response message to the caller.

According to this embodiment, the redirection query function is implemented by the HSS, and determination of redirection information is added into the redirection process, so that the problems such as incorrect accounting and confusion in invoking services are solved.

Embodiment 3

Referring to Fig 8, when the redirection information query network element is Signaling Transfer Point (STP) and the STP is set integrated with the PNM server, and the method includes the following steps.

Step 801: A CS domain user that subscribes to the PNM service is called. The GMSC of the user receives an IAM call request carrying number information of the called user.

Step 802: The GMSC sends routing query message (SRI) to an HLR/HSS. The routing query message (SRI) is intercepted by the STP.

Step 803: The STP send redirection information query message to the upper PNM service according to the intercepted routing query message (SRI), wherein the PNM server performs redirection service logic and obtains redirection information.

It is optional that before the STP sends the redirection information query message, the following steps are performed: the STP determines whether the called user subscribes to the PNM service. If the user dose not subscribe to the PNM service, the STP directly forwards the intercepted routing query message (SRI) to the HSS and no longer sends the redirection information query message to the PNM server. If the user subscribes to the PNM service, the STP sends the redirection information query message to the PNM server.

If the user subscribes to the PNM service, it is further optional that before the STP sends the redirection information query message to the PNM server, the STP further checks subscription status of supplementary services of the user.

Specifically, checking subscription status of supplementary services of the user includes the followings. If the priority of the PNM service is higher of the priority of CS domain supplementary services, or the priority of the PNM service is higher of the priority of other supplementary services but lower than the Call Barring service while the user does not subscribe the Call Barring service or does not activate the Call Barring service, the STP sends the redirection information query message to the PNM service.

Or, if the priority of the PNM service is higher of the priority of other supplementary services but lower than the Call Barring service, and the user activates Calling Barring service of Call Barring service, the STP directly forwards the intercepted routing query message (SRI) to the HSS and does not send the redirection information query message to the PNM server.

Parallel to the above further optional step, when the user subscribes to the PNM service, before the STP sending the redirection information query message, the further optional step also includes checking, by the STP, the subscription status of the CAMEL service of the called user.

Specifically, the checking process includes the followings. If the priority of the PNM service is higher of the priority of CAMEL service of the called user, or the priority of the PNM service is lower than CAMEL service of the called user but the user does not subscribe the CAMEL service of the called user, the STP sends the redirection information query message to the PNM service.

Or, the priority of the PNM service is lower than CAMEL service of the called user, and the user subscribes to the CAMEL service of the called user, the STP determines whether the intercepted routing query message (SRI) is the first routing query request, and determines whether to send the redirection information query message to the PNM server.

If the user subscribes to both the CAMEL service of the called user and the PNM service, and the priority of the PNM service is lower than CAMEL service of the called user, before the STP sends the redirection information query message, the following steps is performed: determining that the routing query message (SRI) is a first routing query request by checking that the routing query message (SRI) intercepted by the STP does not contain an indicator for restraining the CAMEL service of the called user, and directly forwarding the intercepted routing query message (SRI) to the HSS instead of sending the redirection information query message to the PNM server. As a parallel step, determining that the routing query message (SRI) is not a first routing query request by checking that the routing query message (SRI) intercepted by the STP contains an indicator for restraining the CAMEL service of the called user, and sending the redirection information query message to the PNM server according to the intercepted routing query message (SRI).

It is further optional that, if the HSS receives routing query message (SRI), determines that the user subscribes to both the CAMEL service of the called user and the PNM service, and the current routing query message (SRI) is a first routing query request, then a special indicator is carried in routing query acknowledge message (SRI_ACK), so that the GMSC can forward the special indicator to the SCP that performs the CAMEL service of the called use for the called user and a special accounting can be processed.

Step 804: If it is determined from the redirection information returned by the PNM AS that the call need to be redirected and the UE after redirection is also determined, the STP returns routing query acknowledge message (SRI_ACK) redirection information to the GMSC.

Step 805: The GMSC analyzes the number in the redirection information and obtains the number of the new called user equipment, and initiates an IAM request to the new called user equipment.

Step 804': If the PNM AS determines that the current call does not need to be redirected (the currently called user equipment is the UE selected by the redirection service logic or no user that subscribes to the PNM service exists), the STP forwards the intercepted routing query message (SRI) of the GMSC to the HSS/HLR.

Step 805': The HLR/HSS returns a routing query acknowledge message (SRI_ACK) using an existing mechanism.

Step 806': The routing query message (SRI) is intercepted by the STP and is forwarded to the GMSC.

Step 807': The GMSC initiates an accessing request to the center, where the called user locates, according to the routing query acknowledge message (SRI_ACK).

According to the present embodiment, the redirection query function is implemented by an STP that is set integrated with the PNM server, and determination of redirection information is added into the redirection process, so that the problems such as incorrect accounting and confusion in invoking services are solved.

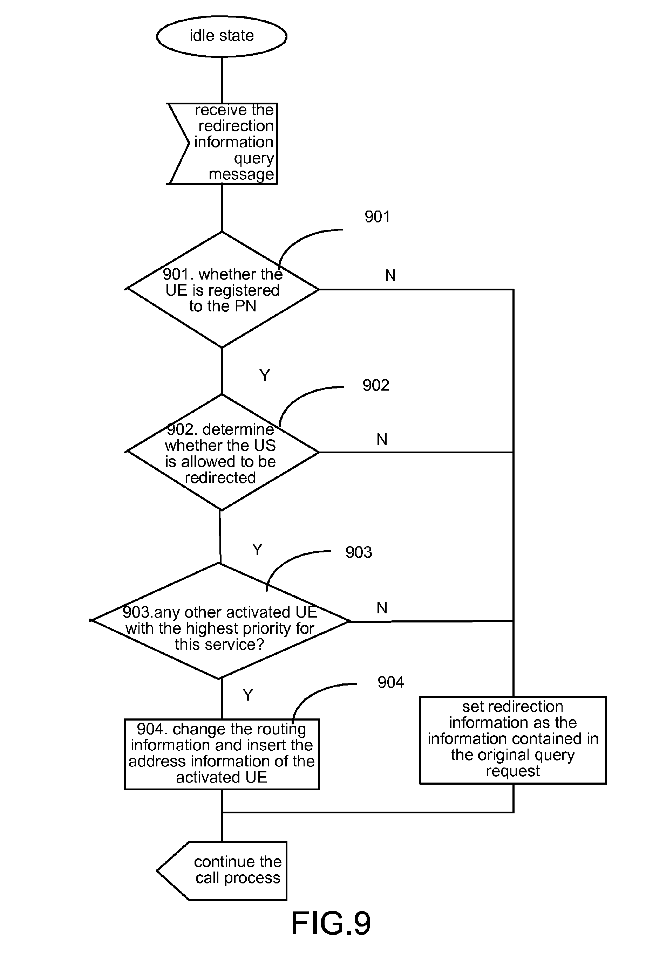

In the above embodiment 1, 2, 3, when the PNM server receives the redirection information query message, the method further includes the following steps, as shown in Fig 9.

Step 901: The PNM server determines whether the called UE carried in the redirection information query message is registered to the PN, if the called UE is not registered to the PN, the redirection information determined by the PNM server is the information of the original called UE, if the called UE is registered to the PN, the PNM server continues to perform step 902.

Step 902: The PNM server determines whether the called US is allowed to be redirected, if the called UE is not allowed to be redirected according to user configuration, then the redirection information determined by the PNM server is the information of the original called UE; if the called UE is allowed to be redirected, the PNM server continues to perform step 903.

Step 903: The PNM server determines, according to user configuration, whether an activated UE exists for the service being performed by the redirection information query message, if the service being performed does not has an activated UE, then the redirection information determined by the PNM server is the information of the original called UE; if the service being performed has an activated UE, the PNM server continues to perform step 904.

The PNM server selects an activated US according to the user configuration, uses address information of the activated UE as the redirection information and returns the redirection information to the redirection information query network element (such as the GMS, HSS, or STP).

Summing up, the redirection information query network element can exist in a network by the above three manner, or can be a separate network element. When the redirection information query network element is a separate network element, it can be connected to the GMSC, HSS or AS and performs the redirection query function. The three connection manners can implement PNM service in corresponding ways associated with the flowcharts of the above three embodiments respectively.

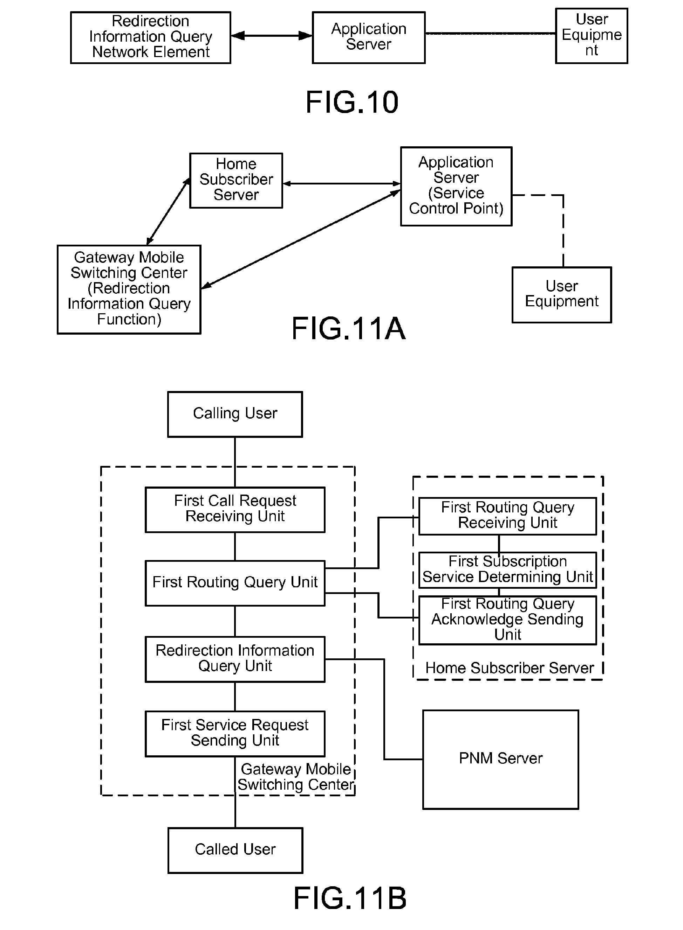

Embodiments of the present invention further disclose a system for implementing PNM service in CS domain, as shown in Fig 10, the system includes a redirection information query network element, a PNM server, and a CS domain user equipment that subscribes to PNM service. The redirection information query network element is adapted to generate a redirection information query message according to a service request generated by the user when the user is called. The redirection information query network element sends the redirection information query message to the PNM server and receives a redirection information message from the PNM server. The redirection information query network element further routes the call to the user equipment that is determined in the redirection information. The PNM server is adapted to perform redirection logic, determines, according to user configurations, whether or not to perform redirection, generates the redirection information message and returns the redirection information message to the redirection information query network element.

According to the present embodiment, the system has at least four forms, i.e., a separate redirection information query network element, a GMSC having redirection query function, an HSS having redirection query function, or a PNM server having redirection query function. When a separate redirection information query network element is provided in the system, the connection relationship between this network element and other network elements determines which manner of the above embodiment shall be used for implementing PNM service. The structure of integrated redirection information query network element is introduced below.

Embodiment 4

Fig 11A and Fig 11B illustrate a block diagram of a system corresponding to the method of embodiment 1. According to this embodiment, the redirection information query network element is GMSC. The GMSC includes a first call request receiving unit, adapted to receive information that the user equipment is called; a first routing query unit, adapted to generate a routing query message according to the information received by the first call request receiving unit, send the routing query message to the HSS in the network, and receive a routing query acknowledge returned by the HSS; a redirection information query unit, adapted to send a redirection information query message to the PNM server according to the routing query acknowledge returned by the HSS, and receive the redirection information returned by the PNM server; and a first service request sending unit, adapted to initiate a call request to the called user equipment that is determined by the redirection information of the PNM server.

The HSS includes a first routing query receiving unit, adapted to receive the routing query message sent by the GMSC, and forward the message to a subscription service determining unit; a first subscription service determining unit, adapted to perform service analysis on the service of the called user according to predetermined service priority, and determine the routing query acknowledge message to be returned to the GMSC; and a first routing query acknowledge sending unit, adapted to send the routing query acknowledge message to the GMSC.

The process of implementing the PNM service by this system can refer to the relative description of embodiment 1.

Embodiment 5

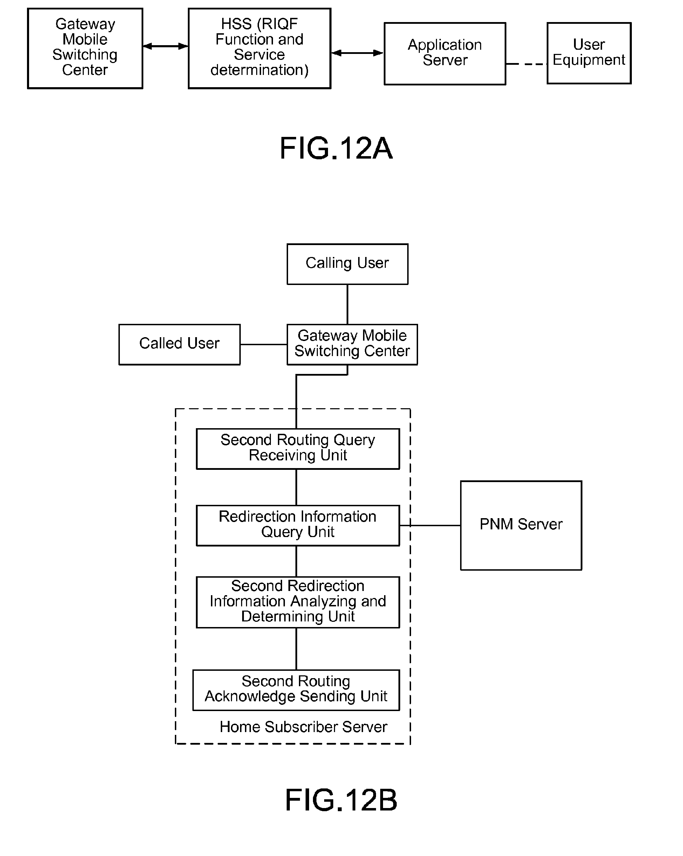

Fig 12A and Fig 12B illustrate a block diagram of a system corresponding to the method of embodiment 2. According to this embodiment, the redirection information query network element is HSS. The HSS includes a second routing query receiving unit, adapted to receive a routing query message generated by the GMSC according to a service request that the user equipment is called; a redirection information query unit, adapted to generate a redirection information query message according to the routing query message received by the second routing query receiving unit, send the redirection information query message to the PNM server, and receive the redirection information returned by the PNM server; a second redirection information analyzing and determining unit, adapted to determine a routing query acknowledge message according to the redirection information received by the redirection information query unit; and a second routing query acknowledge sending unit, adapted to send the routing query acknowledge message determined by the second redirection information analyzing and determining unit to the GMSC.

The process of implementing the PNM service by this system can refer to the relative description of embodiment 2.

Embodiment 6

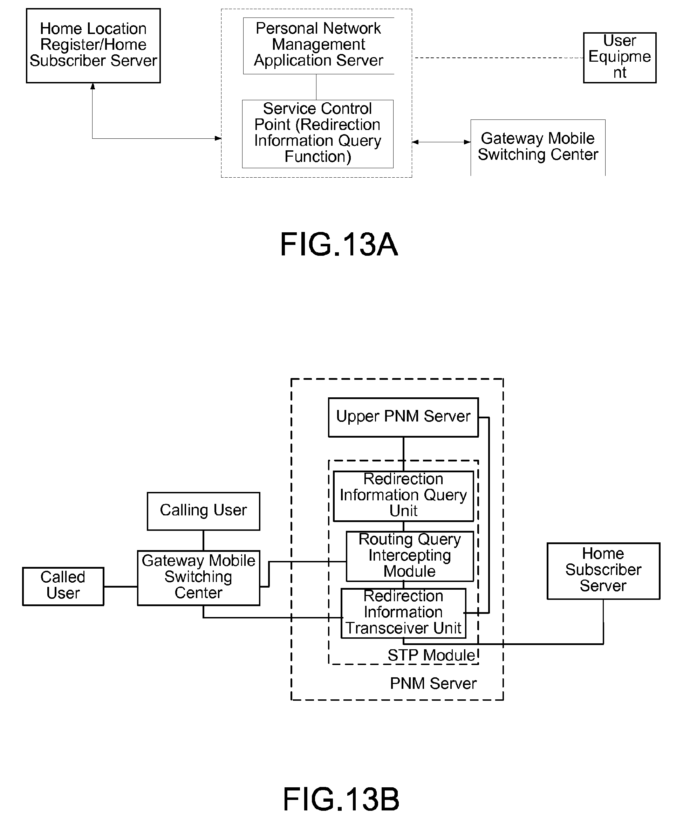

Fig 13A and Fig 13B illustrate a block diagram of a system corresponding to the method of embodiment 3. According to this embodiment, the redirection information query network element is a STP module configured in the PNM server. The PNM server includes a STP module and an upper PNM server. The STP module is adapted to intercept a routing query message sent to the HSS from the GMSC, receive a redirection information returned by the upper PNM server, and forward the redirection information to the GMSC or HSS in the network. The upper PNM server is adapted to receive the redirection information query message send by the STP module, and generate redirection information that determines whether the call is redirected.

According to the present embodiment, the STP module includes a routing query intercepting unit, adapted to intercept the routing query message sent form the GMSC to the HSS; a redirection information query unit, adapted to generate a redirection information query message according to the message intercepted by the routing query intercepting unit, and send the redirection information query message to the upper PNM server; and a redirection information transceiver unit, adapted to receive the redirection information returned by the upper PNM server and forward the redirection information to the GMSC or HSS. The STP module further includes a subscription service determining unit, adapted to analyze services to which the called user subscribes and send the result of the determination to the redirection information query unit.

The process of implementing the PNM service by this system can refer to the relative description of embodiment 3.

Embodiment 7

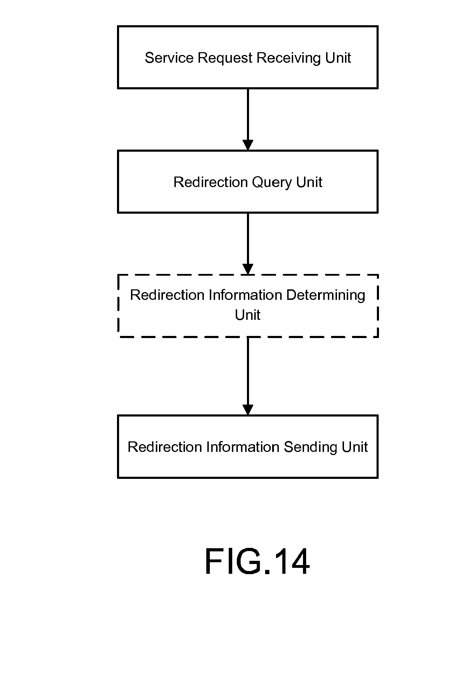

According to an embodiment of the present invention, when implementing PNM service, the redirection information query network element can be provided separately. Fig 14 illustrates a block diagram of a system in which the network element is provided separately. The network element includes a redirection information query network element according to an embodiment of the present invention is used in a PN network, and includes a service request receiving unit, a redirection query unit and a redirection information sending unit, wherein the service request receiving unit is adapted to receive a service request generated by a CS domain user when the user is called. The redirection query unit is adapted to interact with the PNM server to obtain the redirection information according to the service request received by the service request receiving unit. The redirection information sending unit is adapted to send the redirection information obtained by the redirection query unit.

The network element further includes a redirection information determining unit, adapted to determine the redirection information obtained by the redirection query unit, and determine the message to be sent by the redirection information sending unit.

The structure of the redirection information query network elements in embodiments 4, 5, 6 are the same as the structure of the network element of the present embodiment, the network element implements redirection information query function.

In conclusion, methods and systems of the present invention solve the accounting problem and limitation on forwarding service times existing in the prior art, and can call the services to which the CS domain users subscribes according to predetermined priorities.

The above embodiments are merely used to illustrate the present invention but not to limit the present invention. Any modification, equivalent substitution, or improvement within the principal and spirit of the present invention shall be regarded as within the scope of the present invention.

## Claims

1. A method for implementing Personal Network Management, PNM, redirection service in Circuit Switched, CS, domain, **characterized in that,** when a CS domain user in a Personal Network, PN, is called, the method comprises:
sending, by a redirection information query network element, a redirection information query message to a PNM server according to a received service request;
receiving, by the redirection information query network element, a redirection information returned from the PNM server, wherein the redirection information is generated by the PNM server according to user configuration after receiving the redirection information query message; and
performing, by the redirection information query network element, a routing control according to the redirection information and routing the call to a user equipment, UE, that is determined in the redirection information.

2. The method of claim 1, **characterized in that,** the redirection information query network element is a Gateway Mobile Switch Center, GMSC, and sending, by the redirection information query network element, a redirection information query message to a PNM server according to a received service request comprises:
receiving, by a GMSC of the called user, a service request carrying the number of the called user;
sending, by the GMSC of the called user, a routing query message to a Home Subscription Server, HSS, according to the service request, and receiving CAMEL subscription information of the called user that carries redirection intelligent subscription information of the called user returned by the HSS; and
sending, by the GMSC of the called user, the redirection information query message to the PNM server according to the routing query acknowledge message returned by the HSS.

3. The method of claim 2, **characterized in that,** the PNM service is implemented as a Customized Application for Mobile network Enhanced Logic, CAMEL, service of the called user, and the HSS further determines the priority between the PNM service and supplementary services after receiving the routing query message, comprising:
if the priority of the PNM service is higher than the priority of Call Barring service and the called user activates the Call Barring service, after the HSS receives the routing query message, determining, according to user data by the HSS, that the called user is a subscriber that subscribes to the PNM service, and returning the CAMEL subscription information of the called user to the GMSC instead of performing Call Barring service logic; or
if the priority of the PNM service is higher than the priority of Call Barring service and the called user does not subscribes to or activates the Call Barring service, returning directly, by the HSS, the CAMEL subscription information of the called user.

4. The method of claim 1, **characterized in that,** the redirection information query network element is a Home Subscription Server, HSS, and the sending, by the redirection information query network element, a redirection information query message to a PNM server according to a received service request comprises:
receiving, by the HSS, a routing query message sent by a Gateway Mobile Switch Center, GMSC, of the called user, and sending the redirection information query message to the PNM server; and
the performing, by the redirection information query network element, a routing control according to the redirection information and routing the call to the user equipment that is determined in the redirection information comprises:
determining, by the HSS, a routing query acknowledge message to be returned to the GMSC according to user attributes or an analysis of the redirection information returned by the PNM server, and instructing the GMSC to route the call, according to the returned routing query acknowledge message, to a new called user equipment that is newly determined.

5. The method of claim 4, **characterized in that,** the determining, by the HSS, a routing query acknowledge message to be returned to the GMSC according to user attributes or an analysis of the redirection information returned by the PNM server comprises:
determining whether a redirection number determined by the redirection information returned by the PNM is the same as the currently called number in the routing query message;
if the two numbers are the same, invoking, by the HSS, a service or requesting a roaming number from the called center and returning the routing query acknowledge message to the GMSC;
if the two numbers are different, returning directly, by the HSS, the routing query acknowledge message to the GMSC, wherein the routing query acknowledge message carries routing information determined by the PNM redirection service and a special indicator indicating that the current call redirection is caused by PNM service redirection.

6. The method of claim 5, **characterized in that,** if the HSS determines that the redirection number determined by the redirection information returned by the PNM is different from the currently called number in the routing query message, the HSS further performs steps of:
determining whether the called user subscribes to both the PNM service and a forwarding service;
if the user subscribes to both the PNM service and the forwarding service, treating the forwarding number contained in the routing query acknowledge message to be returned to the GMSC to be the redirection number determined by the redirection service, and not returning forwarding data to the GMSC.

7. The method of claim 5, **characterized in that,** if the HSS determines that the redirection number determined by the redirection information returned by the PNM is different from the currently called number in the routing query message, the HSS further performs steps of:
determining whether the called user subscribes to both the PNM service and a CAMEL service of the called user;
if the user subscribes to both the PNM service and the CAMEL service of the called user, determining whether the priority of the PNM service is higher than the priority of the CAMEL service of the called user;
if the priority of the PNM service is higher than the priority of the CAMEL service of the called user, not containing subscription information of the CAMEL service of the called user in the routing query acknowledge message to be returned to the GMSC;
if the priority of the PNM service is not higher than the priority of the CAMEL service of the called user, containing, in the routing query acknowledge message to be returned to the GMSC, both subscription information of the CAMEL service of the called user and routing information and the call redirection instruction determined by the PNM redirection service.

8. The method of claim 5, **characterized in that,** the routing query acknowledge message returned from the HSS to the GMSC carries the special indicator; and
the redirecting, by the CMSC, the call to a new called user equipment that is newly determined according to the returned routing query acknowledge message comprises:
determining, by the GMSC according to the routing query acknowledge message returned by the HSS, that the current call need to be redirected, and the redirection is caused by the PNM redirection service, and carrying the special indicator in a generated accounting information or not modifying the forwarding times.

9. The method of claim 8, **characterized in that,** the special indicator adds a new forwarding reason value through extending Protocol, and identifies that the call redirection is caused by PNM service redirection.

10. The method of claim 1, **characterized in that,** the redirection information query network element is a Signaling Transfer Point, STP, and
the sending, by the redirection information query network element, a redirection information query message to a PNM server according to a received service request comprises:
intercepting, by the STP, a routing query message sent by a GMSC of the called user to the HSS and sending a redirection information query message to the PNM server according to the intercepted message; and
the performing, by the redirection information query network element, a routing control according to the redirection information and routing the call to the user equipment that is determined in the redirection information comprises:
determining, by the STP, whether the call needs to be redirected according to the redirection information returned by the PNM server;
if the call need to be redirected, returning, by the STP, the redirection information to the GMSC and instructing the GMSC to redirect the call to the determined called user equipment;
if the call does not need to be redirected, forwarding, by the STP, the routing query message from the GMSC to the HSS, forwarding the routing query acknowledge message from the HSS to the GMSC, and instructing the GMSC to redirect the call to the determined called user equipment.

11. The method of claim 10, **characterized in that,** the intercepting, by the STP, a routing query message sent by a GMSC of the called user to the HSS and sending a redirection information query message to the PNM server according to the intercepted message further comprises a step before the STP sends the redirection information query message, the step comprising:
determining, by the STP, whether the called user subscribes to the PNM service;
if the called user does not subscribe to the PNM service, forwarding directly, by the STP, the intercepted routing query message to the HSS and no longer sending the redirection information query message to the PNM server;
if the called user subscribes to the PNM service, sending, by the STP, the redirection information query message to the PNM server.

12. The method of claim 11, **characterized in that,** the intercepting, by the STP, a routing query message sent by the GMSC to the HSS and sending a redirection information query message to the PNM server according to the intercepted message further comprises a step before the STP sends the redirection information query message, the step comprising:
checking, by the STP, subscription status of a supplementary service of the called user;
if the priority of the PNM service is higher than the priority of a CS domain supplementary service, or the priority of the PNM service is higher than the priority of other supplementary services but lower than a Call Barring service while the called user does not subscribe to the Call Barring service or does not activate the Call Barring service, sending, by the STP, the redirection information query message to the PNM server;
if the priority of the PNM service is higher than the priority of other supplementary services but lower that Call Barring service and the called user activates Call Barring in the Call Barring service, directly forwarding, by the STP, the intercepted routing query message to the HSS and no longer sending the redirection information query message to the PNM server.

13. The method of claim 11, **characterized in that,** the intercepting, by the STP, a routing query message sent by a GMSC to the HSS and sending a redirection information query message to the PNM server according to the intercepted message further comprises a step before the STP sends the redirection information query message, the step comprising:
checking, by the STP, subscription status of CAMEL service of the called user;
if the priority of the PNM service is higher than the priority of the CAMEL service of the called user, or the priority of the PNM service is lower than the priority of CAMEL service of the called user but the called user does not subscribe to the CAMEL service of the called user or does not activate CAMEL service of the called user, sending, by the STP, the redirection information query message to the PNM server; or
if the priority of the PNM service is lower than the priority of CAMEL service of the called user and the called user subscribes to the CAMEL service of the called user, determining, by the STP, whether the intercepted routing query message is a first routing query request so as to decide whether or not to send the redirection information query message to the PNM server.

14. The method of claim 13, **characterized in that,** if the called user subscribes to both the PNM service and the CAMEL service of the called user, and the priority of the PNM service is lower than the priority of CAMEL service of the called user, the intercepting, by the STP, the routing query message sent from the GMSC to the HSS and sending the redirection information query message to the PNM server according to the intercepted routing query message further comprises a step before the STP sends the redirection information query message, the step comprising:
determining, by the STP, that the current routing query message is the first routing query request when the routing query message intercepted by the STP does not contain a indicator for restraining the CAMEL service of the called user, and directly forwarding the intercepted routing query message to the HSS instead of sending the redirection information query message to the PNM server;
determining, by the STP, that the current routing query message is not a first routing query request when the routing query message intercepted by the STP contains an indicator for restraining the CAMEL service of the called user, and sending the redirection information query message to the PNM server according to the intercepted routing query message.

15. The method of claim 14, **characterized in that,** after the STP directly forwards the routing query message intercepted by the STP to the HSS, the HSS determines that the called user subscribes to both the PNM service and the CAMEL service of the called user and the routing query message is a first routing query request according to the received routing query message, and the HSS further performs a step of:
carrying a special indicator in a routing query acknowledge message to a Service Control Point, SCP, that executes the CAMEL service of the called user.

16. The method of claim 1, **characterized in that,** the step of generating, by the PNM server, the redirection information according to user configuration after receiving the redirection information query message comprises:
determining, by the PNM server, whether the called UE registers to the PN according to the redirection information query message; and wherein
if the called UE does not register to the PN, the redirection information determined by the PNM server is the information of the original called UE;
if the called UE registers to the PN, the PNM server continues to determine whether the called UE is allowed to be redirected;
if the called UE is not allowed to be redirected according to user configuration, the redirection information determined by the PNM server is the information of the original called UE;
if the called UE is allowed to be redirected, the PNM server determines whether an activated UE exists for the service being performed by the redirection information query message;
if the service being performed does not have an activated UE, the redirection information determined by the PNM server is the information of the original called UE;
if the service being performed has an activated UE, the PNM server selects an activated UE according to user configuration, and uses address information of the activated UE as the redirection information.

17. The method of claim 1, **characterized in that,** the PNM server is a Service Control Point, SCP, in CS domain, the redirection information query network element is Gateway Mobile Switch Center, GMSC, and after the PNM server determines the redirection information, the method further comprises:
determining, by the PNM server, that the called user is an online accounting user; wherein
if the PNM redirection services determines that the call need to be redirected, the PNM server does not charge the original called user;
if the PNM redirection services determines that the call does not need to be redirected, the PNM server charges the original called user.

18. A system for implementing Personal Network Management, PNM, service in a Circuit Switched domain, **characterized in** comprising:
a redirection information query network element, adapted to generate a redirection information query message according to a service request generated by a user when the user is called, send the redirection information query message, receive a redirection information message, and route the call to a user equipment that is determined in the redirection information;
a PNM server, adapted to receive the redirection information query message, perform redirection logic, determine whether or not to perform redirection according to user configuration, generate the redirection information message, and return the redirection information message to the redirection information query network element.

19. The system of claim 18, **characterized in that,** the redirection information query network element is a Gateway Mobile Switching Center, GMSC, wherein the GMSC comprises:
a first call request receiving unit, adapted to receive called information of the user equipment;
a first routing query unit, adapted to generate a routing query message according to the information received by the first call request receiving unit, send the routing query message to the HSS in the network, and receive a routing query acknowledge returned by a Home Subscriber Server, HSS;
a redirection information query unit, adapted to send the redirection information query message to the PNM server according to the routing query acknowledge returned by the HSS, and receive the redirection information returned by the PNM server; and
a first service request sending unit, adapted to initiate a call request to the called user equipment that is determined by the PNM server from the redirection information.

20. The system of claim 19, **characterized in that,** the HSS comprises:
a first routing query receiving unit, adapted to receive the routing query message sent by the GMSC, and forward the message to a subscription service determining unit;
a first subscription service determining unit, adapted to analyze the service of the called user according to predetermined service priority, and determine the routing query acknowledge message to be returned to the GMSC; and
a first routing query acknowledge sending unit, adapted to send the routing query acknowledge message to the GMSC.

21. The system of claim 18, **characterized in that,** the redirection information query network element is an HSS, wherein the HSS comprises:
a second routing query receiving unit, adapted to receive a routing query message generated by the GMSC according to a service request that the user equipment is called;
a redirection information query unit, adapted to generate a redirection information query message according to the routing query message received by the second routing query receiving unit, send the redirection information query message to the PNM server, and receive the redirection information returned by the PNM server;
a second redirection information analyzing and determining unit, adapted to determine a routing query acknowledge message according to the redirection information received by the redirection information query unit; and
a second routing query acknowledge sending unit, adapted to send the routing query acknowledge message determined by the second redirection information analyzing and determining unit to the GMSC.

22. The system of claim 18, **characterized in that,** the redirection information query network element is a Signaling Transfer Point, STP, module provided in the PNM server, and the PNM server comprises a STP module and an upper PNM server, wherein
the STP module is adapted to intercept a routing query message sent to the HSS from the GMSC, send the redirection information query message to the upper PNM server according to the intercepted information, receive redirection information returned from the upper PNM server, and forward the redirection information to the GMSC or HSS in the network;
the upper PNM server is adapted to receive the redirection information query message send by the STP module, and generate a redirection information that determines whether the call needs to be redirected.

23. The system of claim 22, **characterized in that,** the STP module comprises:
a routing query intercepting unit, adapted to intercept the routing query message sent form the GMSC to the HSS;
a redirection information query unit, adapted to generate a redirection information query message according to the message intercepted by the routing query intercepting unit, and send the redirection information query message to the upper PNM server; and
a redirection information transceiver unit, adapted to receive the redirection information returned by the upper PNM server, and forward the redirection information to the GMSC or HSS.

24. The system of claim 23, **characterized in that,** the STP module further comprises:
a subscription service determining unit, adapted to analyze the services that are subscribed to by the called user and send the result of the determination to the redirection information query unit.

25. A redirection information query network element, being used in a Personal Network, PN, **characterized in** comprising a service request receiving unit, a redirection query unit and a redirection information sending unit, wherein
the service request receiving unit is adapted to receive a service request generated by a CS domain user when the user is called;
the redirection query unit is adapted to interact with the PNM server to obtain the redirection information according to the service request received by the service request receiving unit; and
the redirection information sending unit is adapted to send out the redirection information obtained by the redirection query unit.

26. The network element of claim 25, **characterized in** further comprising:
a redirection information determining unit, adapted to determine the redirection information obtained by the redirection query unit, and determine the message to be sent by the redirection information sending unit.

27. The network element of claim 25, **characterized in that,**
the network element is configured in the GMSC, HSS or the STP of the PNM server.
